# EUROPEAN PATENT APPLICATION

(11) **EP 4 598 261 A1**
(43) Date of publication of application: **06.08.2025**
(21) Application number: 22959780.2
(22) Date of filing: 26.09.2022
(51) Int. Cl.: H04W 88/04, H04W 76/19

(54) **METHOD FOR CONTROLLING CONNECTION OF TERMINAL DEVICE, AND APPARATUS**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/121502
(87) International publication number: WO 2024/065128

(57) **Abstract**

Disclosed in embodiments of the present disclosure are a method for controlling connection of a terminal device, and an apparatus, capable of being applied to a terminal device-to-network (U2N) relay scenario. The method comprises: when a first terminal device in a connected state receives a first message sent by a second terminal device, the first terminal device determines, according to a first condition, whether to start radio resource control (RRC) reconstruction, wherein the first terminal device is a remote terminal device in the U2N relay scenario, and the second terminal device is a relay terminal device in the U2N relay scenario. By implementing the embodiments of the present disclosure, unnecessary connection reconstruction can be prevented from being triggered when a notification message sent by the relay terminal device is received, thereby saving resources and avoiding resource waste.

## Description

### FIELD

The present invention relates to the field of communication technology, and more particularly to a method and device for controlling terminal connection.

### BACKGROUND

In order to support direct communication between a terminal (also called user equipment, UE) and another UE, a sidelink communication mode is introduced, and an interface between UEs is PC-5. A UE may communicate with a network device (such as a base station) through the relay of another UE instead of directly connecting with the network device, where the UE that is not connected to the network device is called a remote UE, the UE that provides the relay function is called a relay UE, the remote UE and the relay UE communicate with each other through a sidelink, and this architecture is called terminal to network (i.e., UE to NW, U2N) relay.

The remote UE may establish a direct link and an indirect link with the network device (such as a base station). The direct link is a link in which the remote UE is directly connected to the network device, and the indirect link is a link in which the remote UE is indirectly connected to the network device via a relay UE. The remote UE may maintain connection with the network device through both the direct link and the indirect link, and this function is called multipath connection (Multipath), which enables the remote UE to support multipath transmission, thereby improving the transmission rate and transmission reliability. It should be noted that the remote UE needs to be in a connected state to support the multipath connection.

In the related art, when the relay UE encounters connection problems such as radio link failure, handover, cell reselection, radio resource control (RRC) connection failure, etc., a notification message is sent to the connected remote UE via the sidelink. When the remote UE in the connected state receives the notification message sent by the relay UE, the remote UE triggers reestablishment to ensure normal communication. However, in this case, unnecessary connection reestablishment usually happens.

Therefore, there is currently a lack of effective means for controlling remote UE connection in the U2N relay scenario.

### SUMMARY

Embodiments of the present invention provide a method and device for controlling terminal connection, which may be applied to a terminal to network (UE to NW, also called U2N) relay scenario. The terminal in a connected state determines whether it is necessary to initiate radio resource control (RRC) reestablishment according to a condition, so that it is possible to avoid triggering unnecessary connection reestablishment when a notification message is received from a relay terminal, thereby saving resources and avoiding resource waste.

In a first aspect, embodiments of the present invention provide a method for controlling terminal connection, which is applied to a user equipment (UE) to network (U2N) relay scenario and performed by a first terminal, and includes: determining whether to initiate radio resource control (RRC) reestablishment according to a first condition, in response to the first terminal in a connected state receiving a first message sent by a second terminal. The first terminal is a remote terminal in the U2N relay scenario, and the second terminal is a relay terminal in the U2N relay scenario.

In this technical solution, the terminal in the connected state determines whether it is necessary to initiate the RRC reestablishment according to the condition, so that it is possible to avoid triggering unnecessary connection reestablishment when a notification message is received from the relay terminal, thereby saving resources and avoiding resource waste.

In an embodiment, the first condition is that the first terminal is configured with multipath transmission; and determining whether to initiate the RRC reestablishment according to the first condition includes: not initiating the RRC reestablishment, in a case where it is determined that the first terminal is configured with the multipath transmission; or initiating the RRC reestablishment, in a case where it is determined that the first terminal is not configured with the multipath transmission.

In a possible embodiment, it is determined that the first terminal is configured with the multipath transmission by any of: determining that a network device configures a multipath bearer for the first terminal; or determining that a network device configures both a direct bearer and an indirect bearer for the first terminal.

In an embodiment, the first condition includes that the first terminal is configured with multipath transmission, and that an indirect path in the multipath transmission is not a primary path. Determining whether to initiate the RRC reestablishment according to the first condition includes: not initiating the RRC reestablishment, in a case where it is determined that the first terminal is configured with the multipath transmission, and that the indirect path in the multipath transmission is not the primary path; or initiating the RRC reestablishment, in a case where it is determined that the first terminal is not configured with the multipath transmission, and/or that the indirect path in the multipath transmission is the primary path. The indirect path is a path in which the first terminal is indirectly connected to a network device via the second terminal.

In a possible embodiment, the first condition includes that the first terminal is configured with multipath transmission, that an indirect path in the multipath transmission is a primary path, and that the first terminal is configured with a failure recovery function. Determining whether to initiate the RRC reestablishment according to the first condition includes: not initiating the RRC reestablishment, in a case where it is determined that the first terminal is configured with the multipath transmission, that the indirect path in the multipath transmission is the primary path, and that the first terminal is configured with the failure recovery function; or initiating the RRC reestablishment, in a case where it is determined that the first terminal is not configured with the multipath transmission, and/or that the indirect path in the multipath transmission is not the primary path, and/or that the first terminal is not configured with the failure recovery function.

In a possible embodiment, it is determined that the indirect path in the multipath transmission is the primary path by any of: determining that the indirect path is used to transmit a signaling radio bearer (SRB); determining that the first terminal triggers an RRC connection reestablishment, after the indirect path fails; determining that the indirect path is a primary transmission path of an SRB; determining that the indirect path is a path for maintaining an RRC connection; determining that the indirect path is an anchor path; or determining that a cell connected by the indirect path is a primary cell of the first terminal.

In a possible embodiment, it is determined that the first terminal is configured with the failure recovery function by: determining that a timer runs. The timer is a timer that is initiated after the first terminal reports link failure information to a network device, and the link failure information is used to indicate that link failure occurs in a direct link or an indirect link in the multipath transmission.

In a possible embodiment, the first message is a notification message sent by the second terminal to the first terminal connected via a sidelink in a first situation; or the first message includes the notification message and an indication type in the notification message is radio link failure. The first situation includes any one of: occurrence of radio link failure; occurrence of handover; occurrence of cell reselection; or occurrence of RRC connection failure.

In a second aspect, embodiments of the present invention provide a communication device, which has some or all of functions of the terminal for implementing the method as described in the first aspect above. For example, the communication device may have functions as described in some or all the embodiments in the present invention, or may also have functions to separately implement any of the embodiments in the present invention. The functions may be implemented by hardware, or may be implemented by software executed on corresponding hardware. The hardware or the software includes one or more units or modules corresponding to the above functions.

In an embodiment, the communication device may include a transceiver module and a processing module in structure. The processing module is configured to support the communication device to perform corresponding functions in the above method. The transceiver module is configured to support the communication device to communicate with other devices. The communication device may further include a storage module, which is configured to couple with the transceiver module and the processing module, and store computer programs and data necessary for the communication device.

As an example, the processing module may be a processor, the transceiver module may be a transceiver or a communication interface, and the storage module may be a memory.

In a third aspect, embodiments of the present application provide a communication device. The communication device includes a processor, and the processor is configured to perform the method described in the first aspect when calling computer programs in a memory.

In a fourth aspect, embodiments of the present application provide a communication device. The communication device includes a processor and a memory having stored therein computer programs; and the processor is configured to execute the computer programs stored in the memory to cause the communication device to perform the method described in the first aspect above.

In a fifth aspect, embodiments of the present application provide a communication device. The device includes a processor and an interface circuit. The interface circuit is configured to receive code instructions and transmit the code instructions to the processor. The processor is configured to run the code instructions to cause the device to perform the method described in the first aspect.

In a sixth aspect, embodiments of the present invention provide a computer-readable storage medium for storing instructions to be used by the above terminal, and the instructions, when executed, cause the terminal to perform the method described in the first aspect.

In a seventh aspect, the present invention further provides a computer program product, which includes computer programs that, when run on a computer, cause the computer to perform the method described in the first aspect above.

In an eighth aspect, the present invention provides a chip system, which includes at least one processor and at least one interface, for supporting a terminal to implement functions described in the first aspect, for example, to determine or process at least one of data and information involved in the above method. In a possible design, the chip system further includes a memory for storing computer programs and data necessary for the terminal. The chip system may consist of chips, or may include chips and other discrete devices.

In a ninth aspect, the present invention provides a computer program that, when run on a computer, causes the computer to perform the method described in the first aspect above.

### BRIEF DESCRIPTION OF THE DRAWINGS

In order to clearly illustrate the technical solutions in embodiments of the present invention or in the related art, drawings to be used for the description of embodiments of the present invention or the related art are described below.
FIG. 1 is a schematic architecture diagram of a communication system according to embodiments of the present invention;
FIG. 2 is a schematic flowchart of a method for controlling terminal connection according to embodiments of the present invention;
FIG. 3 shows a flowchart of a method for controlling terminal connection according to an example embodiment;
FIG. 4 shows a flowchart of a method for controlling terminal connection according to an example embodiment;
FIG. 5 shows a flowchart of a method for controlling terminal connection according to an example embodiment;
FIG. 6 is a schematic diagram of a communication device according to embodiments of the present invention;
FIG. 7 is a schematic diagram of another communication device according to embodiments of the present invention; and
FIG. 8 is a schematic diagram of a chip according to embodiments of the present invention.

### DETAILED DESCRIPTION

Reference will now be made in detail to embodiments of the present invention, examples of which are illustrated in the accompanying drawings, throughout which the same or similar numbers represent the same or similar elements or elements with the same or similar functions. The embodiments described below with reference to the accompanying drawings are illustrated and intended to explain the present invention, and should not be construed as limitations on the present invention. In the description of the present invention, unless otherwise specified, the character "/" means "or", for example, A/B means A or B; the term "and/or" herein is merely a description of an association relationship of associated objects, indicating that three relationships may exist, for example, A and/or B may represent three cases: A alone, both A and B, and B alone.

Terms used in embodiments of the present invention are only for the purpose of describing specific embodiments, but should not be construed to limit the embodiments of the present invention. As used in embodiments of the present invention and the appended claims, "a/an", "said" and "the" in singular forms are intended to include plural forms, unless clearly indicated in the context otherwise.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, second information may also be referred to as first information, without departing from the scope of the embodiments of the present invention. Depending on the context, the term "if" as used herein may be construed to mean "when" or "upon" or "in response to determining".

Embodiments of the present invention will be described in detail below, examples of which are shown in the accompanying drawings, in which the same or similar numbers in different drawings represent the same or similar elements. The embodiments described below with reference to the accompanying drawings are illustrative, which are intended to explain the present invention, and shall not be construed to limit the present invention.

In order to support direct communication between a terminal (also called UE) and another UE, a sidelink communication mode is introduced, and an interface between UEs is PC-5. Depending on a corresponding relationship between a sending UE and a receiving UE, three transmission modes are supported on the sidelink, such as unicast, multicast and broadcast. The sending UE sends sidelink control information (SCI) on a physical sidelink control channel (PSCCH) and sends second-stage SCI on a physical sidelink shared channel (PSSCH), which carry a resource location of transmission data, a source identifier, a target identifier, etc. After receiving the SCI, the receiving UE determines whether to receive the corresponding data and which process it corresponds to according to the source UE identifier and the target UE identifier. In the unicast connection, each UE corresponds to a target identifier. In the multicast, each UE may belong to one or more groups, and each group corresponds to a target identifier. In the broadcast, all UEs correspond to at least one target identifier.

A UE may communicate with a network device (such as a base station) through the relay of another UE instead of directly connecting with the network device, where the UE that is not connected to the network device is called a remote UE, the UE that provides the relay function is called a relay UE, the remote UE and the relay UE communicate with each other through a sidelink, and this architecture is called terminal to network (i.e., UE to NW, U2N) relay.

The remote UE may establish a direct link and an indirect link with the network device (such as a base station). The direct link is a link in which the remote UE is directly connected to the network device, and the indirect link is a link in which the remote UE is indirectly connected to the network device via a relay UE. The remote UE may maintain connection with the network device through both the direct link and the indirect link, and this function is called multipath connection (Multipath), which enables the remote UE to support multipath transmission, thereby improving the transmission rate and transmission reliability. It should be noted that the remote UE needs to be in a connected state to support the multipath connection.

When the relay UE encounters any case of radio link failure, handover, cell reselection, RRC connection failure, the relay UE sends a notification message (such as NotificationMessagesidelink) to the connected remote UE via the sidelink, and the relay UE carries an indication type (indicationType) in the notification message according to the event that triggers the notification message. In an implementation, if the relay UE encounters the radio link failure, the indication type may be set to relay UE radio link failure (relayUE-UuRLF); if the relay UE encounters the handover, the indication type may be set to relay UE handover (relayUE-HO); if the relay UE encounters the cell reselection, the indication type may be set to relay UE cell reselection (relayUE-CellReselection); if the relay UE encounters the connection failure, the indication type may be set to relay UE RRC failure (relayUE-UuRRCFailure).

When the remote UE receives the notification message, the remote UE in the connected state will trigger the reestablishment to ensure normal communication. However, in this case, unnecessary connection reestablishment usually happens. Therefore, there is currently a lack of effective means for controlling remote UE connection in the U2N relay scenario.

For this, embodiments of the present invention propose a method for controlling remote UE connection in the U2N relay scenario. In the following, a communication system to which embodiments of the present invention are applicable is described first below.

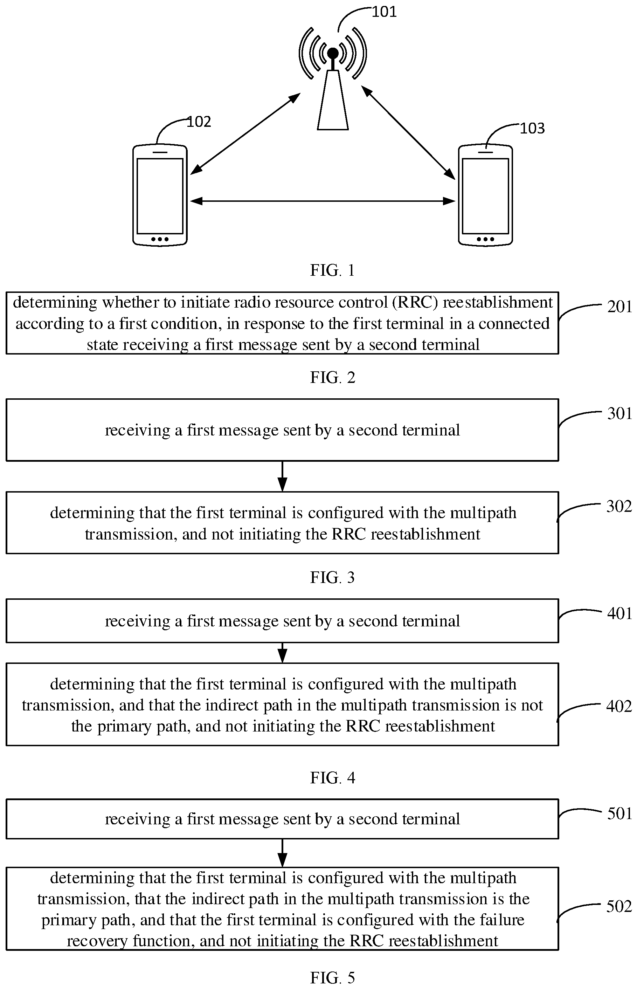

Referring to FIG. 1, FIG. 1 is a schematic architecture diagram of a communication system according to embodiments of the present invention. The communication system may include, but not limited to, one network device and two terminals. The number and forms of the devices shown in FIG. 1 are only used as an example, and do not constitute a limitation on embodiments of the present invention. In actual applications, two or more network devices may be included. As an example for illustration, the communication system shown in FIG. 1 includes one network device 101 and two terminals or UEs (such as a first terminal 102 and a second terminal 103).

It should be noted that the technical solutions as set forth in embodiments of the present invention may be applied to various communication systems, for example, a long term evolution (LTE) system, a 5th generation (5G) mobile communication system, a 5G new radio (NR) system, or other new mobile communication systems in the future. It should also be noted that the sidelink in embodiments of the present invention may also be called a side link or a direct communication link.

The network device 101 in embodiments of the present invention is an entity at a network side for sending or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. Embodiments of the present invention do not limit the specific technique and specific device form adopted by the network device. The network device according to embodiments of the present invention may be composed of a central unit (CU) and distributed units (DUs). The CU may also be called a control unit. The CU-DU structure allows to split protocol layers of the network device, such as a base station, functions of some protocol layers are centrally controlled in the CU, functions of some or all of the remaining protocol layers are distributed in the DUs, and the CU centrally controls the DUs.

The first terminal 102 and the second terminal 103 in embodiments of the present invention each may be an entity at a user side for receiving or sending signals, such as a mobile phone. The terminal may also be called a terminal device, a user equipment (UE), a mobile station (MS), a mobile terminal (MT), and so on. The terminal may be a device with a communication function, such as a car, a smart car, a mobile phone, a wearable device, a tablet Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in smart city, a wireless terminal in smart home, etc. Embodiments of the present invention do not limit the specific technique and the specific device form adopted by the terminals.

It is worth noting that in the wireless communication system shown in FIG. 1, the first terminal 102 and the second terminal 103 communicate with each other via a sidelink. In some embodiments, the first terminal 102 may communicate with the network device 101 through the relay of the second terminal 103 instead of directly connecting with the network device 101, where the first terminal 102 that is not connected to the network device 101 is called a remote UE, the second terminal 103 that provides the relay function is called a relay UE, the remote UE and the relay UE perform unicast communication with each other through a sidelink, and this architecture is called terminal to network (i.e., UE to NW, U2N) relay.

In some embodiments, the first terminal 102 and the network device 101 may establish a direct link and an indirect link. The direct link is a link in which the first terminal 102 is directly connected to the network device 101, and the indirect link is a link in which the first terminal 102 is indirectly connected to the network device 101 via the second terminal 103. It should be noted that the first terminal 102 here serves as a remote UE, and the second terminal 103 serves as a relay UE. In this way, the remote UE may maintain connection with the network device via the direct link and the indirect link at the same time, and this function is called multipath connection (Multipath), which enables the remote UE to support multipath transmission, thereby improving the transmission rate and transmission reliability. It should be noted that the remote UE needs to be in a connected state to support the multipath connection.

It should also be noted that the first terminal 102 serves as a remote UE, and the second terminal 103 serves as a relay UE. A bearer of the remote UE may be transmitted only through a direct path, called a direct bearer, or may be transmitted only through an indirect path, called an indirect bearer, or may be transmitted through both the direct path and the indirect path, called a multipath bearer. A cell to which the remote UE is directly connected may be the same as or different from a cell to which the relay UE is connected.

In some embodiments, in the multipath scheme, the two paths are classified as a primary path and a secondary path.

In some embodiments, when the second terminal is configured with multiple cell groups, namely master cell group (MCG) and secondary cell group (SCG), if the second terminal encounters radio link failure in a cell group, the second terminal is able to send failure information to the network device through another cell group, so that the network device may reconfigure a new cell for the failed cell group, so as to recover the communication. The failure information includes the cause of failure and a latest measurement result on the cell from the terminal. In an embodiment, when the first terminal is connected to the network device through both the direct link and the indirect link, if one of the direct link and the indirect link fails, the first terminal may report the failure information of that link to assist the network in recovering the failed link, which enables the first terminal to have a failure recovery function, and the failure recovery function enables the network device to recover the failed link in time, thereby reducing the delay of data transmission in the failed link.

It can be understood that the communication system described in embodiments of the present invention aims to illustrate the technical solutions according to the embodiments of the present invention more clearly, and does not constitute a limitation on the technical solution according to the embodiments of the present invention. Those skilled in the art know that with the evolution of the system architecture and the emergence of new service scenarios, the technical solutions according to the embodiments of the present invention are also applicable to similar technical problems.

The method and device for controlling terminal connection provided in the present invention will be described in detail below with reference to the accompanying drawings.

Referring to FIG. 2, FIG. 2 is a schematic flowchart of a method for controlling terminal connection according to embodiments of the present invention. It should be noted that the method according to embodiments of the present invention may be applied to a terminal to network (U2N) relay scenario, and the method may be performed by a first terminal. It should be noted that the first terminal here serves as a remote UE in the U2N relay scenario, and a second terminal serves as a relay UE in the U2N relay scenario. The remote UE may establish a direct link and an indirect link with a network device. The direct link is a link in which the remote UE is directly connected to the network device, and the indirect link is a link in which the remote UE is indirectly connected to the network device via the relay UE. The remote UE may maintain the connection with the network device through both the direct link and the indirect link at the same time, and this function is called multipath connection (Multipath), which enables the remote UE to support multipath transmission, thereby improving the transmission rate and transmission reliability. It should be noted that the remote UE needs to be in a connected state to support the multipath connection.

As shown in FIG. 2, the method may include but is not limited to the following step.

In step 201, whether to initiate radio resource control (RRC) reestablishment is determined according to a first condition, in response to the first terminal in a connected state receiving a first message sent by a second terminal

Optionally, the first terminal in the connected state receives the first message sent by the second terminal, and the first terminal may determine whether it needs to initiate the RRC reestablishment, for example, the first terminal may determine whether it needs to initiate the RRC reestablishment according to the first condition.

In some embodiments, the first message may be a notification message sent by the second terminal to the first terminal connected via a sidelink in a first situation. Alternatively, in some other embodiments, the first message may include the notification message and an indication type; the indication type may be used to indicate a reason why the second terminal loses the link with the network device (i.e., the first situation). For example, the indication type may be radio link failure. The first situation may include any one of: occurrence of radio link failure; occurrence of handover; occurrence of cell reselection; or occurrence of RRC connection failure.

In a possible embodiment, taking the case where the first message is the notification message as an example, when the second terminal encounters any case of: radio link failure; handover; cell reselection; or RRC connection failure, the second terminal sends the notification message (such as NotificationMessagesidelink) to the connected remote UE via the sidelink. The first terminal in the connected state receives the notification message sent by the second terminal, and the first terminal may determine whether it needs to initiate the RRC reestablishment. Optionally, the first terminal may determine whether it needs to initiate the RRC reestablishment according to the first condition.

In another possible embodiment, take the case that the first message includes the notification message and the indication type as an example; when the second terminal encounters any of: radio link failure; handover; cell reselection; or RRC connection failure, the second terminal sends the first message to the connected remote UE via the sidelink, and the first message may include the notification message. In addition, the second terminal may also carry the indication type in the first message depending on the event that triggers the notification message. As an example, when the first terminal in the connected state receives the first message sent by the second terminal, and the indication type carried in the first message is the radio link failure, the first terminal may determine whether it needs to initiate the RRC reestablishment according to the first condition. That is, when the first terminal in the connected state receives the first message sent by the second terminal, and the indication type carried in the first message is the radio link failure, it may be considered in this case that the second terminal encounters the radio link failure, and the first terminal in the connected state may determine whether it needs to initiate the RRC reestablishment according to the first condition.

By implementing embodiments of the present invention, the terminal in the connected state may determine whether it needs to initiate the RRC reestablishment, which may avoid triggering unnecessary connection reestablishment to cause the connection interruption when the notification message is received from the relay terminal, thereby saving resources and avoiding resource waste.

It should be noted that, in some embodiments, the first condition may be that the first terminal is configured with multipath transmission. The first terminal may determine whether to initiate the RRC reestablishment according to the first condition, if the first terminal meets the first condition, the RRC reestablishment may not be initiated; if the first terminal does not meet the first condition, the RRC reestablishment needs to be initiated. Optionally, FIG. 3 shows a flowchart of a method for controlling terminal connection according to an example embodiment. It should be noted that the method according to embodiments of the present invention may be applied to a terminal to network (U2N) relay scenario, and the method may be performed by a first terminal, and the first terminal is in a connected state. It should be noted that the first terminal here serves as a remote UE in the U2N relay scenario, and the second terminal serves as a relay UE in the U2N relay scenario. As shown in FIG. 3, the method may include but is not limited to the following steps.

In step 301, a first message sent by the second terminal is received.

In an embodiment, after the first terminal in the connected state receives the first message sent by the second terminal, the first terminal determines whether multipath transmission is configured to determine whether RRC reestablishment needs to be initiated.

In embodiments of the present invention, the step 301 may be implemented in any manner as described in various embodiments of the present invention, which is not limited in the embodiments of the present invention and will not be described in detail again. For example, the manner as described in the aforementioned step 201 may be used to receive the first message sent by the first terminal. The first message may be a notification message; or the first message includes a notification message and an indication type, and the indication type may be used to indicate the reason why the second terminal loses the link with the network device.

In step 302, it is determined that the first terminal is configured with multipath transmission, and RRC reestablishment is not initiated.

Optionally, it is determined that the first terminal is configured with the multipath transmission, it may be considered that the first terminal supports the multipath transmission, so that the first terminal may be directly connected to the network device via a direct path in the multipath transmission, and may also be indirectly connected to the network device via an indirect path in the multipath transmission. For the case where the second terminal encounters any of: radio link failure, handover, cell reselection, or RRC connection failure, the first message is sent to the first terminal. After the first terminal receives the first message sent by the second terminal, since the first terminal is configured with the multipath transmission, the first terminal may also be directly connected to the network device via a link of the direct path (i.e., a direct link) in the multipath transmission, so that the first terminal can continue to maintain the connection with the network device, so the first terminal may not initiate the RRC reestablishment, thereby avoiding the connection interruption caused by the unnecessary connection reestablishment performed by the remote UE when receiving information indicating the radio link failure from the relay UE.

In a possible embodiment, if the first terminal determines that the network device configures a multipath bearer for the first terminal, it may be determined that the first terminal is configured with the multipath transmission.

In another possible embodiment, if the first terminal determines that the network device configures both a direct bearer and an indirect bearer for the first terminal, it may be determined that the first terminal is configured with the multipath transmission.

By implementing the embodiments of the present invention, in the case where it is determined that the first terminal is configured with the multipath transmission, the RRC reestablishment may not be initiated, so as to avoid the connection interruption caused by the unnecessary connection reestablishment performed by the remote UE when receiving information indicating the radio link failure from the relay UE, thereby saving resources and avoiding resource waste.

Optionally, in some embodiments of the present invention, it is determined that the first terminal is not configured with the multipath transmission, and the RRC reestablishment is initiated.

Optionally, after the first terminal in the connected state receives the first message sent by the second terminal, the first terminal determines that the first terminal is not configured with the multipath transmission, it may be considered that the first terminal does not have the function of multipath transmission. For the case where the second terminal encounters any of: radio link failure, handover, cell reselection, or RRC connection failure, the first message is sent to the first terminal. After the first terminal receives the first message sent by the second terminal, since the first terminal does not have the function of multipath transmission, the first terminal needs to initiate the RRC reestablishment to ensure normal connection with the network device and ensure normal communication of the terminal.

It should be noted that, in some embodiments, the first condition may include that the first terminal is configured with multipath transmission, and that an indirect path in the multipath transmission is not a primary path, the first terminal may determine whether to initiate the RRC reestablishment according to the first condition, if the first terminal meets the first condition, the RRC reestablishment may not be initiated; if the first terminal does not meet the first condition, the RRC reestablishment needs to be initiated. Optionally, FIG. 4 shows a flowchart of a method for controlling terminal connection according to an example embodiment. It should be noted that the method according to embodiments of the present invention may be applied to a terminal to network (U2N) relay scenario, and the method may be performed by a first terminal, and the first terminal is in a connected state. It should be noted that the first terminal here serves as a remote UE in the U2N relay scenario, and the second terminal serves as a relay UE in the U2N relay scenario. As shown in FIG. 4, the method may include but is not limited to the following steps.

In step 401, a first message sent by the second terminal is received.

In embodiments of the present invention, the step 401 may be implemented in any manner as described in various embodiments of the present invention, which is not limited in the embodiments of the present invention and will not be described in detail again. For example, the manner as described in the aforementioned step 201 may be used to receive the first message sent by the first terminal. The first message may be a notification message; or the first message includes a notification message and an indication type, and the indication type may be used to indicate the reason why the second terminal loses the link with the network device.

In an embodiment, after the first terminal in the connected state receives the first message sent by the second terminal, the first terminal determines whether multipath transmission is configured and whether the indirect path in the multipath transmission is not the primary path to determine whether the RRC reestablishment needs to be initiated.

In embodiments of the present invention, the step 401 may be implemented in any manner as described in various embodiments of the present invention, which is not limited in the embodiments of the present invention and will not be described in detail again.

In step 402, it is determined that the first terminal is configured with the multipath transmission and that the indirect path in the multipath transmission is not the primary path, and the RRC reestablishment is not initiated.

The indirect path is a path in which the first terminal is indirectly connected to the network device via the second terminal. If it is determined that the indirect path is not the primary path, the indirect path is a secondary path.

Optionally, it is determined that the first terminal is configured with the multipath transmission, it may be considered that the first terminal supports the multipath transmission, so that the first terminal may be directly connected to the network device via a direct path in the multipath transmission, and may also be indirectly connected to the network device via an indirect path in the multipath transmission. For the case where the second terminal encounters any of: radio link failure, handover, cell reselection, or RRC connection failure, the first message is sent to the first terminal. After the first terminal receives the first message sent by the second terminal, since the first terminal is configured with the multipath transmission, and the indirect path in the multipath transmission is not the primary path, the first terminal may also be directly connected to the network device via a link of the direct path (i.e., a direct link) in the multipath transmission, so that the first terminal can continue to maintain the connection with the network device, so the first terminal may not initiate the RRC reestablishment, thereby avoiding the connection interruption caused by the unnecessary connection reestablishment performed by the remote UE when receiving information indicating the radio link failure from the relay UE.

Optionally, in some embodiments of the present invention, it is determined that the first terminal is not configured with the multipath transmission, and/or that the indirect path in the multipath transmission is the primary path, the RRC reestablishment is initiated.

In an embodiment, after the first terminal in the connected state receives the first message sent by the second terminal, the first terminal determines that the first terminal is not configured with the multipath transmission, and/or that the indirect path in the multipath transmission is the primary path, then the first terminal needs to initiate the RRC reestablishment to ensure the normal communication of the terminal.

In some embodiments of the present invention, the first terminal may determine that the indirect path in the multipath transmission is the primary path by any of the following manners: determining that the indirect path is used to transmit a signaling radio bearer (SRB); determining that the first terminal triggers an RRC connection reestablishment, after the indirect path fails; determining that the indirect path is a primary transmission path of an SRB; determining that the indirect path is a path for maintaining an RRC connection; determining that the indirect path is an anchor path; or determining that a cell connected by the indirect path is a primary cell of the first terminal.

In a possible embodiment, in the case where it is determined that the indirect path is used to transmit the signaling radio bearer (SRB), it is determined that the indirect path in the multipath transmission is the primary path.

In another possible embodiment, in the case where it is determined that the first terminal triggers the RRC connection reestablishment after the indirect path fails, it is determined that the indirect path in the multipath transmission is the primary path.

In another possible embodiment, in the case where it is determined that the indirect path is the primary transmission path of the SRB, it is determined that the indirect path in the multipath transmission is the primary path.

In another possible embodiment, in the case where it is determined that the indirect path is the path for maintaining the RRC connection, it is determined that the indirect path in the multipath transmission is the primary path.

In another possible embodiment, in the case where it is determined that the indirect path is the anchor path, it is determined that the indirect path in the multipath transmission is the primary path.

In another possible embodiment, in the case where it is determined that the cell connected by the indirect path is the primary cell of the first terminal, it is determined that the indirect path in the multipath transmission is the primary path.

It should be noted that, in some embodiments, the first condition may include that the first terminal is configured with multipath transmission, that an indirect path in the multipath transmission is a primary path, and that the first terminal is configured with a failure recovery function, the first terminal may determine whether to initiate RRC reestablishment based on the first condition, if the first terminal meets the first condition, the RRC reestablishment may not be initiated; if the first terminal does not meet the first condition, the RRC reestablishment needs to be initiated. Optionally, FIG. 5 shows a flowchart of a method for controlling terminal connection according to an example embodiment. It should be noted that the method according to embodiments of the present invention may be applied to a terminal to network (U2N) relay scenario, and the method may be performed by a first terminal, and the first terminal is in a connected state. It should be noted that the first terminal here serves as a remote UE in the U2N relay scenario, and the second terminal serves as a relay UE in the U2N relay scenario. As shown in FIG. 5, the method may include but is not limited to the following steps.

In step 501, a first message sent by the second terminal is received.

In embodiments of the present invention, the step 501 may be implemented in any manner as described in various embodiments of the present invention, which is not limited in the embodiments of the present invention and will not be described in detail again. For example, the manner as described in the aforementioned step 201 may be used to receive the first message sent by the first terminal. The first message may be a notification message; or the first message includes a notification message and an indication type, and the indication type may be used to indicate the reason why the second terminal loses the link with the network device.

In an embodiment, after the first terminal in the connected state receives the first message sent by the second terminal, the first terminal determines whether multipath transmission is configured, whether the indirect path in the multipath transmission is not the primary path, and whether the first terminal is configured with the failure recovery function, to determine whether the RRC reestablishment needs to be initiated.

In embodiments of the present invention, the step 501 may be implemented in any manner as described in various embodiments of the present invention, which is not limited in the embodiments of the present invention and will not be described in detail again.

In step 502, it is determined that the first terminal is configured with the multipath transmission, that the indirect path in the multipath transmission is the primary path, and that the first terminal is configured with the failure recovery function, and the RRC reestablishment is not initiated.

Optionally, it is determined that the first terminal is configured with the multipath transmission, it may be considered that the first terminal supports the multipath transmission, so that the first terminal may be directly connected to the network device via a direct path in the multipath transmission, and may also be indirectly connected to the network device via the indirect path in the multipath transmission. For the case where the second terminal encounters any of: radio link failure, handover, cell reselection, or RRC connection failure, the first message is sent to the first terminal. In the case where the first terminal is configured with the multipath transmission, although the indirect path in the multipath transmission is the primary path, since the first terminal is configured with the failure recovery function, the first terminal can assist the network device in recovering the failed link through the failure recovery function. In this case, the first terminal may not initiate the RRC reestablishment to avoid the connection interruption caused by the unnecessary connection reestablishment performed by the remote UE when receiving information indicating the radio link failure from the relay UE.

In a possible embodiment, the first terminal may determine that the first terminal is configured with the failure recovery function in the following manner, including: determining that a timer runs. The timer is a timer that is initiated after the first terminal reports link failure information to the network device, and the link failure information is used to indicate that link failure occurs in the direct link or the indirect link in the multipath transmission. That is, when the first terminal determines that the timer runs, it determines that the first terminal is configured with the failure recovery function.

Optionally, in some embodiments, the first terminal initiates the RRC reestablishment in a case where it is determined that the first terminal is not configured with the multipath transmission, and/or that the indirect path in the multipath transmission is not the primary path, and/or that the first terminal is not configured with the failure recovery function.

In some embodiments, the failure recovery function may be implemented as follows: when the first terminal is connected to the network device via both the direct link and the indirect link at the same time, if one of the direct link and the indirect link fails, the first terminal may report failure information of that link to assist the network in recovering the failed link.

In a possible embodiment, in a case where the indirect link fails, the first terminal reports indirect link failure information to the network device via the direct link. The indirect link failure information may include at least one of: cause information of the indirect link failure; terminal information of a third terminal, including at least one of a terminal identifier, a wireless channel quality of a sidelink between the first terminal and the third terminal, or a service cell identifier of the third terminal; or a terminal identifier of the second terminal. The third terminal may be a terminal that can establish an indirect link for the first terminal.

Optionally, the cause of the indirect link failure includes at least one of the followings: radio link failure occurs in the sidelink between the first terminal and the second terminal; a sidelink RLC entity notifies that a first maximum number of retransmissions is reached for transmissions; a T400 timer expires; a sidelink MAC entity notifies that a maximum number of lose feedbacks is reached; a sidelink PDCP entity notifies that integrity detection of SL-SRB2 fails; the sidelink PDCP entity notifies that integrity detection of SL-SRB3 fails; continuous LBT failure occurs in the sidelink between the first terminal and the second terminal; radio link failure occurs in the second terminal; connection failure occurs in the second terminal; the PC5-RRC connection between the first terminal and the second terminal is released.

In a possible embodiment, in the case where the direct link fails, the first terminal reports direct link failure information to the network device via the indirect link. The direct link failure information includes cause information of the direct link failure, and the cause information of the direct link failure includes at least one of: radio link failure; T310 timer expiring; T312 timer expiring; reaching a second maximum number of retransmissions for RLC retransmissions; random access failure; beam recovery failure; continuous LBT failure.

In the above embodiments provided in the present invention, the methods according to embodiments of the present invention are introduced from the perspective of the first terminal respectively. In order to implement the various functions in the methods according to the embodiments of the present invention as described above, the first terminal may include hardware structure(s) and/or software module(s), and implement the above various functions in the form of the hardware structure(s), the software module(s), or the hardware structure(s) in combination with the software module(s). A certain function among the above mentioned various functions may be implemented in the manner of the hardware structure, the software module, or the hardware structure in combination with the software module.

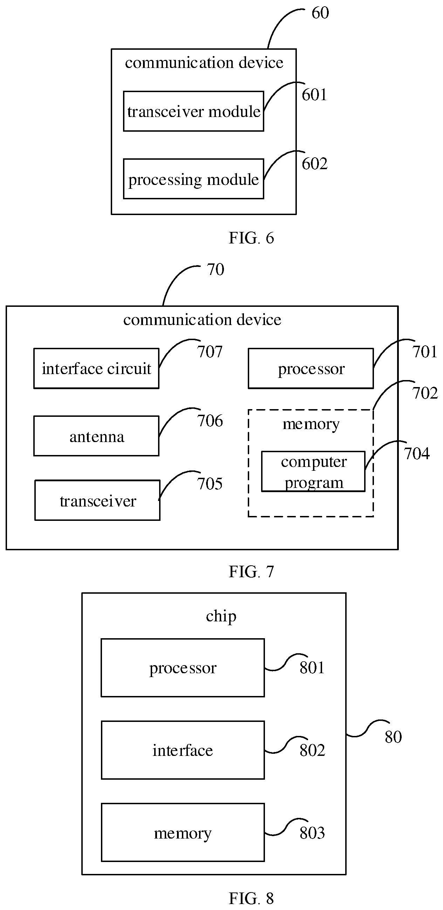

Referring to FIG. 6, FIG. 6 is a schematic block diagram of a communication device 60 according to embodiments of the present invention. The communication device 60 shown in FIG. 6 may include a transceiver module 601 and a processing module 602. The transceiver module 601 may include a sending module and/or a receiving module, the sending module is configured to implement a sending function, the receiving module is configured to implement a receiving function, and the transceiver module 601 may implement the sending function and/or the receiving function.

The communication device 60 may be a terminal (such as the first terminal as described in the method embodiments hereinbefore), an apparatus in the terminal, or an apparatus that can be matched with the terminal.

The communication device 60 is the terminal (such as the first terminal as described in the method embodiments hereinbefore): the transceiver module 601 is configured to receive a first message sent by a second terminal; and the processing module 602 is configured to determine whether to initiate radio resource control (RRC) reestablishment according to a first condition, in a case where the first terminal in a connected state receives the first message sent by the second terminal. The first terminal is a remote terminal in a user equipment (UE) to network (U2N) relay scenario, and the second terminal is a relay terminal in the U2N relay scenario.

In an embodiment, the first condition is that the first terminal is configured with multipath transmission; and the processing module 602 is specifically configured to: not initiate the RRC reestablishment, in a case where it is determined that the first terminal is configured with the multipath transmission; or initiate the RRC reestablishment, in a case where it is determined that the first terminal is not configured with the multipath transmission.

In a possible embodiment, the processing module 602 is further configured to: determine that the first terminal is configured with the multipath transmission, in a case where it is determined that a network device configures a multipath bearer for the first terminal; or determine that the first terminal is configured with the multipath transmission, in a case where it is determined that a network device configures both a direct bearer and an indirect bearer for the first terminal.

In an embodiment, the first condition includes that the first terminal is configured with multipath transmission, and that an indirect path in the multipath transmission is not a primary path; and the processing module 602 is specifically configured to: not initiate the RRC reestablishment, in a case where it is determined that the first terminal is configured with the multipath transmission, and that the indirect path in the multipath transmission is not the primary path; or initiate the RRC reestablishment, in a case where it is determined that the first terminal is not configured with the multipath transmission, and/or that the indirect path in the multipath transmission is the primary path; where the indirect path is a path in which the first terminal is indirectly connected to a network device via the second terminal.

In another embodiment, the first condition includes that the first terminal is configured with multipath transmission, that an indirect path in the multipath transmission is a primary path, and that the first terminal is configured with a failure recovery function; and the processing module 602 is specifically configured to: not initiate the RRC reestablishment, in a case where it is determined that the first terminal is configured with the multipath transmission, that the indirect path in the multipath transmission is the primary path, and that the first terminal is configured with the failure recovery function; or initiate the RRC reestablishment, in a case where it is determined that the first terminal is not configured with the multipath transmission, and/or that the indirect path in the multipath transmission is not the primary path, and/or that the first terminal is not configured with the failure recovery function.

In a possible embodiment, the processing module 602 is further configured to: determine that the indirect path in the multipath transmission is the primary path, in a case where it is determined that the indirect path is used to transmit a signaling radio bearer (SRB); or determine that the indirect path in the multipath transmission is the primary path, in a case where it is determined that the first terminal triggers an RRC connection reestablishment after the indirect path fails; or determine that the indirect path in the multipath transmission is the primary path, in a case where it is determined that the indirect path is a primary transmission path of an SRB; or determine that the indirect path in the multipath transmission is the primary path, in a case where it is determined that the indirect path is a path for maintaining an RRC connection; or determine that the indirect path in the multipath transmission is the primary path, in a case where it is determined that the indirect path is an anchor path; or determine that the indirect path in the multipath transmission is the primary path, in a case where it is determined that a cell connected by the indirect path is a primary cell of the first terminal.

In another embodiment, the processing module 602 is further configured to: determine that the first terminal is configured with the failure recovery function, in a case where it is determined that a timer runs; where the timer is a timer that is initiated after the first terminal reports link failure information to a network device, and the link failure information is used to indicate that link failure occurs in a direct link or an indirect link in the multipath transmission.

In an embodiment, the first message is a notification message sent by the second terminal to the first terminal connected via a sidelink in a first situation; or the first message includes the notification message and an indication type in the notification message is radio link failure. The first situation includes any one of: occurrence of radio link failure; occurrence of handover; occurrence of cell reselection; or occurrence of RRC connection failure.

With respect to the devices in the above embodiments, the specific manners of individual modules therein to perform respective operations have been described in detail in the embodiments related to the methods, which will not be elaborated herein.

Referring to FIG. 7, FIG. 7 is a schematic block diagram of another communication device 70 according to embodiments of the present invention. The communication device 70 may be a terminal (such as the first terminal as described in the method embodiments hereinbefore), or may also be a chip, a chip system, a processor or the like that supports the terminal to implement the above method. The device may be used to implement the methods as described in the above method embodiments, and for details, reference may be made to the descriptions on the above method embodiments.

The communication device 70 may include one or more processors 701. The processor 701 may be a general-purpose processor or a special-purpose processor. For example, it may be a baseband processor or a central processing unit. The baseband processor may be configured to process a communication protocol and communication data, and the central processing unit may be configured to control a communication device (such as a base station, a baseband chip, a terminal, a terminal chip, a DU or a CU, etc.), execute computer programs, and process data of computer programs.

Optionally, the communication device 70 may further include one or more memories 702 that may have stored therein computer programs 704. The processor 701 executes the computer programs 704 to cause the communication device 70 to perform the methods as described in the above method embodiments. Optionally, the memory 702 may have stored therein data. The communication device 70 and the memory 702 may be set separately or integrated together.

Optionally, the communication device 70 may further include a transceiver 705 and an antenna 706. The transceiver 705 may be called a transceiver element, a transceiver machine, a transceiver circuit or the like, for implementing a transceiver function. The transceiver 705 may include a receiver and a transmitter. The receiver may be called a receiving machine, a receiving circuit or the like, for implementing a receiving function. The transmitter may be called a sending machine, a sending circuit or the like for implementing a sending function.

Optionally, the communication device 70 may further include one or more interface circuits 707. The interface circuit 707 is configured to receive a code instruction and transmit the code instruction to the processor 701. The processor 701 runs the code instruction to enable the communication device 70 to perform the methods as described in the foregoing method embodiments.

The communication device 70 is the terminal (such as the first terminal as described in the method embodiments hereinbefore): the processor 701 is configured to perform the step 201 in FIG. 2; the step 302 in FIG. 3; the step 402 in FIG. 4; or the step 502 in FIG. 5. The transceiver 705 is configured to perform the step 301 in FIG. 3; the step 401 in FIG. 4; or the step 501 in FIG. 5.

In an embodiment, the processor 701 may include the transceiver configured to implement receiving and sending functions. For example, the transceiver may be a transceiver circuit, an interface, or an interface circuit. The transceiver circuit, the interface or the interface circuit configured to implement the receiving and sending functions may be separated or may be integrated together. The above transceiver circuit, interface or interface circuit may be configured to read and write codes/data, or the above transceiver circuit, interface or interface circuit may be configured to transmit or transfer signals.

In an embodiment, the processor 701 may have stored therein computer programs that, when run on the processor 701, cause the communication device 70 to perform the method as described in the foregoing method embodiments. The computer programs may be solidified in the processor 701, and in this case, the processor 701 may be implemented by hardware.

In an embodiment, the communication device 70 may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (PMOS, also called positive channel metal oxide semiconductor), a bipolar junction transistor (BJT), a bipolar CMOS (BiCMOS), silicon germanium (SiGe), gallium arsenide (GaAs), etc.

The communication device described in the above embodiments may be a terminal (such as the first terminal as described in the foregoing method embodiments), but the scope of the communication device described in the present invention is not limited thereto, and a structure of the communication device may not be limited by FIG. 7. The communication device may be a stand-alone device or may be a part of a larger device. For example, the communication device may be:
(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal, an intelligent terminal, a cellular phone, a wireless device, a handheld machine, a mobile unit, a vehicle device, a network device, a cloud device, an artificial intelligence device, etc.;
(6) others.

For the case where the communication device may be a chip or a chip system, reference may be made to a schematic structural diagram of the chip shown in FIG. 8. The chip shown in FIG. 8 includes a processor 801 and an interface 802. In the chip, one or more processors 801 may be provided, and a plurality of interfaces 802 may be provided.

For the case where the chip is used to implement functions of the terminal (such as the first terminal as described in the foregoing method embodiments) in embodiments of the present invention: the interface 802 is configured to receive a first message sent by a second terminal; and the processor 801 is configured to determine whether to initiate radio resource control (RRC) reestablishment according to a first condition, in a case where the first terminal in a connected state receives the first message sent by the second terminal. The first terminal is a remote terminal in a user equipment (UE) to network (U2N) relay scenario, and the second terminal is a relay terminal in the U2N relay scenario.

In an embodiment, the first condition is that the first terminal is configured with multipath transmission; and the processor 801 is specifically configured to: not initiate the RRC reestablishment, in a case where it is determined that the first terminal is configured with the multipath transmission; or initiate the RRC reestablishment, in a case where it is determined that the first terminal is not configured with the multipath transmission.

In a possible embodiment, the processor 801 is further configured to: determine that the first terminal is configured with the multipath transmission, in a case where it is determined that a network device configures a multipath bearer for the first terminal; or determine that the first terminal is configured with the multipath transmission, in a case where it is determined that a network device configures both a direct bearer and an indirect bearer for the first terminal.

In an embodiment, the first condition includes that the first terminal is configured with multipath transmission, and that an indirect path in the multipath transmission is not a primary path; and the processor 801 is specifically configured to: not initiate the RRC reestablishment, in a case where it is determined that the first terminal is configured with the multipath transmission, and that the indirect path in the multipath transmission is not the primary path; or initiate the RRC reestablishment, in a case where it is determined that the first terminal is not configured with the multipath transmission, and/or that the indirect path in the multipath transmission is the primary path; where the indirect path is a path in which the first terminal is indirectly connected to a network device via the second terminal.

In another embodiment, the first condition includes that the first terminal is configured with multipath transmission, that an indirect path in the multipath transmission is a primary path, and that the first terminal is configured with a failure recovery function; and the processor 801 is specifically configured to: not initiate the RRC reestablishment, in a case where it is determined that the first terminal is configured with the multipath transmission, that the indirect path in the multipath transmission is the primary path, and that the first terminal is configured with the failure recovery function; or initiate the RRC reestablishment, in a case where it is determined that the first terminal is not configured with the multipath transmission, and/or that the indirect path in the multipath transmission is not the primary path, and/or that the first terminal is not configured with the failure recovery function.

In a possible embodiment, the processor 801 is further configured to: determine that the indirect path in the multipath transmission is the primary path, in a case where it is determined that the indirect path is used to transmit a signaling radio bearer (SRB); or determine that the indirect path in the multipath transmission is the primary path, in a case where it is determined that the first terminal triggers an RRC connection reestablishment after the indirect path fails; or determine that the indirect path in the multipath transmission is the primary path, in a case where it is determined that the indirect path is a primary transmission path of an SRB; or determine that the indirect path in the multipath transmission is the primary path, in a case where it is determined that the indirect path is a path for maintaining an RRC connection; or determine that the indirect path in the multipath transmission is the primary path, in a case where it is determined that the indirect path is an anchor path; or determine that the indirect path in the multipath transmission is the primary path, in a case where it is determined that a cell connected by the indirect path is a primary cell of the first terminal.

In another embodiment, the processor 801 is further configured to: determine that the first terminal is configured with the failure recovery function, in a case where it is determined that a timer runs; where the timer is a timer that is initiated after the first terminal reports link failure information to a network device, and the link failure information is used to indicate that link failure occurs in a direct link or an indirect link in the multipath transmission.

In an embodiment, the first message is a notification message sent by the second terminal to the first terminal connected via a sidelink in a first situation; or the first message includes the notification message and an indication type in the notification message is radio link failure. The first situation includes any one of: occurrence of radio link failure; occurrence of handover; occurrence of cell reselection; or occurrence of RRC connection failure.

Optionally, the chip further includes a memory 803 for storing necessary computer programs and data.

Those skilled in the art may also understand that various illustrative logical blocks and steps listed in embodiments of the present invention may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of embodiments of the present invention.

The present invention also provides a readable storage medium having stored therein instructions that, when executed by a computer, cause functions of any of the above method embodiments to be implemented.

The present invention also provides a computer program product that, when executed by a computer, causes functions of any of the above method embodiments to be implemented.

The above embodiments may be implemented in whole or in part by software, hardware, firmware or any combination thereof. When implemented using software, the above embodiments may be implemented in whole or in part in a form of the computer program product. The computer program product includes one or more computer programs. When the computer program is loaded and executed on the computer, all or part of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present invention are only for convenience of description, and are not intended to limit the scope of the embodiments of the present invention, nor are they intended to represent a sequential order.

The term "at least one" used in the present invention may also be described as one or more, and the term "a plurality of" may cover two, three, four or more, which are not limited in the present invention. In embodiments of the present invention, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present invention may be configured or predefined. The values of various information in each table are just examples, and may be configured as other values, which are not limited in the present invention. When configuring a correspondence between the information and various parameters, it is not necessary to configure all the correspondences shown in the tables. For example, the correspondences shown in some rows of a table in the present invention may not be configured. For another example, appropriate deformations or adjustments (such as splitting, merging, and so on) can be made based on the above table. The names of parameters shown in the titles of the above tables may also adopt other names understandable by the communication device, and the values or representations of the parameters may also be other values or representations understandable by the communication device. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present invention may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by electronic hardware, or a combination of computer software and electronic hardware. Whether these functions are executed by hardware or software depends on the specific applications and design constraints of the technical solution. For each particular application, those skilled in the art may use different methods to implement the described functions, but such implementation should not be considered beyond the scope of the present invention.

Those skilled in the art can clearly understand that for the convenience and brevity of the description, the specific working process of the above-described system, device and unit may refer to the corresponding process in the foregoing method embodiments, which will not be repeated here.

The above only describes some specific embodiments of the present invention, but the protection scope of the present invention is not limited thereto. Any changes or substitutions that are conceivable to those skilled in the art within the technical scope of the present invention should fall within the protection scope of the present invention. Therefore, the protection scope of the present invention should be determined by the protection scope of the claims.

## Claims

1. A method for controlling terminal connection, applied to a user equipment (UE) to network (U2N) relay scenario and performed by a first terminal, comprising:
determining whether to initiate radio resource control (RRC) reestablishment according to a first condition, in response to the first terminal in a connected state receiving a first message sent by a second terminal;
wherein the first terminal is a remote terminal in the U2N relay scenario, and the second terminal is a relay terminal in the U2N relay scenario.

2. The method according to claim 1, wherein the first condition is that the first terminal is configured with multipath transmission; and determining whether to initiate the RRC reestablishment according to the first condition comprises:
not initiating the RRC reestablishment, in a case where it is determined that the first terminal is configured with the multipath transmission; or
initiating the RRC reestablishment, in a case where it is determined that the first terminal is not configured with the multipath transmission.

3. The method according to claim 2, wherein it is determined that the first terminal is configured with the multipath transmission by any of:
determining that a network device configures a multipath bearer for the first terminal; or
determining that a network device configures both a direct bearer and an indirect bearer for the first terminal.

4. The method according to claim 1, wherein the first condition comprises that the first terminal is configured with multipath transmission, and that an indirect path in the multipath transmission is not a primary path;
wherein determining whether to initiate the RRC reestablishment according to the first condition comprises:
not initiating the RRC reestablishment, in a case where it is determined that the first terminal is configured with the multipath transmission, and that the indirect path in the multipath transmission is not the primary path; or
initiating the RRC reestablishment, in a case where it is determined that the first terminal is not configured with the multipath transmission, and/or that the indirect path in the multipath transmission is the primary path;
wherein the indirect path is a path in which the first terminal is indirectly connected to a network device via the second terminal.

5. The method according to claim 1, wherein the first condition comprises that the first terminal is configured with multipath transmission, that an indirect path in the multipath transmission is a primary path, and that the first terminal is configured with a failure recovery function;
wherein determining whether to initiate the RRC reestablishment according to the first condition comprises:
not initiating the RRC reestablishment, in a case where it is determined that the first terminal is configured with the multipath transmission, that the indirect path in the multipath transmission is the primary path, and that the first terminal is configured with the failure recovery function; or
initiating the RRC reestablishment, in a case where it is determined that the first terminal is not configured with the multipath transmission, and/or that the indirect path in the multipath transmission is not the primary path, and/or that the first terminal is not configured with the failure recovery function.

6. The method according to claim 4 or 5, wherein it is determined that the indirect path in the multipath transmission is the primary path by any of:
determining that the indirect path is used to transmit a signaling radio bearer (SRB);
determining that the first terminal triggers an RRC connection reestablishment, after the indirect path fails;
determining that the indirect path is a primary transmission path of an SRB;
determining that the indirect path is a path for maintaining an RRC connection;
determining that the indirect path is an anchor path; or
determining that a cell connected by the indirect path is a primary cell of the first terminal.

7. The method according to claim 5, wherein it is determined that the first terminal is configured with the failure recovery function by:
determining that a timer runs; wherein the timer is a timer that is initiated after the first terminal reports link failure information to a network device, and the link failure information is used to indicate that link failure occurs in a direct link or an indirect link in the multipath transmission.

8. The method according to any one of claims 1 to 7, wherein
the first message is a notification message sent by the second terminal to the first terminal connected via a sidelink in a first situation; or
the first message comprises the notification message and an indication type in the notification message is radio link failure;
wherein the first situation comprises any one of:
occurrence of radio link failure;
occurrence of handover;
occurrence of cell reselection; or
occurrence of RRC connection failure.

9. A communication device, applied to a first terminal, comprising:
a transceiver module, configured to receive a first message sent by a second terminal; and
a processing module, configured to determine whether to initiate radio resource control (RRC) reestablishment according to a first condition, in a case where the first terminal in a connected state receives the first message sent by the second terminal;
wherein the first terminal is a remote terminal in a user equipment (UE) to network (U2N) relay scenario, and the second terminal is a relay terminal in the U2N relay scenario.

10. The device according to claim 9, wherein the first condition is that the first terminal is configured with multipath transmission;
the processing module is specifically configured to:
not initiate the RRC reestablishment, in a case where it is determined that the first terminal is configured with the multipath transmission; or
initiate the RRC reestablishment, in a case where it is determined that the first terminal is not configured with the multipath transmission.

11. The device according to claim 10, wherein the processing module is further configured to:
determine that the first terminal is configured with the multipath transmission, in a case where it is determined that a network device configures a multipath bearer for the first terminal; or
determine that the first terminal is configured with the multipath transmission, in a case where it is determined that a network device configures both a direct bearer and an indirect bearer for the first terminal.

12. The device according to claim 9, wherein the first condition comprises that the first terminal is configured with multipath transmission, and that an indirect path in the multipath transmission is not a primary path;
wherein the processing module is specifically configured to:
not initiate the RRC reestablishment, in a case where it is determined that the first terminal is configured with the multipath transmission, and that the indirect path in the multipath transmission is not the primary path; or
initiate the RRC reestablishment, in a case where it is determined that the first terminal is not configured with the multipath transmission, and/or that the indirect path in the multipath transmission is the primary path;
wherein the indirect path is a path in which the first terminal is indirectly connected to a network device via the second terminal.

13. The device according to claim 9, wherein the first condition comprises that the first terminal is configured with multipath transmission, that an indirect path in the multipath transmission is a primary path, and that the first terminal is configured with a failure recovery function;
wherein the processing module is specifically configured to:
not initiate the RRC reestablishment, in a case where it is determined that the first terminal is configured with the multipath transmission, that the indirect path in the multipath transmission is the primary path, and that the first terminal is configured with the failure recovery function; or
initiate the RRC reestablishment, in a case where it is determined that the first terminal is not configured with the multipath transmission, and/or that the indirect path in the multipath transmission is not the primary path, and/or that the first terminal is not configured with the failure recovery function.

14. The device according to claim 12 or 13, wherein the processing module is further configured to:
determine that the indirect path in the multipath transmission is the primary path, in a case where it is determined that the indirect path is used to transmit a signaling radio bearer (SRB);
determine that the indirect path in the multipath transmission is the primary path, in a case where it is determined that the first terminal triggers an RRC connection reestablishment after the indirect path fails;
determine that the indirect path in the multipath transmission is the primary path, in a case where it is determined that the indirect path is a primary transmission path of an SRB;
determine that the indirect path in the multipath transmission is the primary path, in a case where it is determined that the indirect path is a path for maintaining an RRC connection;
determine that the indirect path in the multipath transmission is the primary path, in a case where it is determined that the indirect path is an anchor path; or
determine that the indirect path in the multipath transmission is the primary path, in a case where it is determined that a cell connected by the indirect path is a primary cell of the first terminal.

15. The device according to claim 13, wherein the processing module is further configured to:
determine that the first terminal is configured with the failure recovery function, in a case where it is determined that a timer runs; wherein the timer is a timer that is initiated after the first terminal reports link failure information to a network device, and the link failure information is used to indicate that link failure occurs in a direct link or an indirect link in the multipath transmission.

16. The device according to any one of claims 9 to 15, wherein
the first message is a notification message sent by the second terminal to the first terminal connected via a sidelink in a first situation; or
the first message comprises the notification message and an indication type in the notification message is radio link failure;
wherein the first situation comprises any one of:
occurrence of radio link failure;
occurrence of handover;
occurrence of cell reselection; or
occurrence of RRC connection failure.

17. A communication device, comprising:
a processor; and
a memory, having stored therein computer programs;
wherein the processor is configured to execute the computer programs stored in the memory to cause the device to perform the method according to any one of claims 1 to 8.

18. A computer-readable storage medium having stored therein instructions that, when executed, causes the method according to any one of claims 1 to 8 to be implemented.
